# EUROPÄISCHE PATENTANMELDUNG

(11) **EP 0 684 088 A1**
(43) Veröffentlichungstag der Anmeldung: **29.11.1995**
(21) Anmeldenummer: 95103167.3
(22) Anmeldetag: 06.03.1995
(51) Int. Cl.: B09C 1/02

(54) **Verfahren zur Reinigung von kontaminierten Materialien, insbesondere von kontaminiertem Boden sowie mobile Anlage zur Durchführung des Verfahrens**

(30) Priorität: 05.03.1994 DE 4407368
(71) Anmelder: Müller, Wilhelm, 52074 Aachen (DE)
(72) Erfinder: Müller, Wilhelm, D-52074 Aachen (DE)
(74) Vertreter: Dipl.-Ing. H. Hauck, Dipl.-Ing. E. Graalfs, Dipl.-Ing. W. Wehnert, Dr.-Ing. W. Döring, Dr.-Ing. N. Siemons

(57) **Zusammenfassung**

Es werden ein Verfahren sowie eine mobile Anlage zur Reinigung von kontaminierten Materialien, insbesondere von kontaminiertem Boden, bereitgestellt. Die kontaminierten Materialien werden mit einer tensidhaltigen Waschflüssigkeit gereinigt (8,21). Nach Abtrennung, Spülung und Trocknung der gereinigten Materialien können diese wiederverwertet werden. Die mit den Schadstoffen kontaminierte Waschflüssigkeit wird gesammelt und wiederaufbereitet (29,31,32), wobei die Schadstoffe abgetrennt werden.

## Beschreibung

Die Erfindung bezieht sich auf ein Verfahren zur Reinigung von kontaminierten Materialien, insbesondere von kontaminiertem Boden, sowie auf eine mobile Anlage zur Durchführung des Verfahrens, insbesondere auf eine mobile Bodenwaschanlage.

Aufgrund des gravierenden Altlastenproblems wurden in den letzten Jahren eine Reihe von Verfahren und Anlagen entwickelt, um eine Bodensanierung zu erreichen. Unter Bodensanierung werden alle Maßnahmen zur Sicherung und Dekontamination von Altlasten oder anderen schädlichen Bodenbelastungen verstanden. Bodensicherungsmaßnahmen verhindern die Schadstoff-Ausbreitung. Die Bodendekontamination umfaßt alle Maßnahmen zur Beseitigung der Schadstoffe. Diesbezüglich sind verschiedene Verfahrensweisen möglich. Der belastete Boden kann ausgekoffert und auf Deponien abgelagert werden. Der belastete Boden kann ferner verbrannt oder biologisch saniert werden. Eines der wichtigsten Verfahren besteht in der chemisch-physikalischen Bodenbehandlung, die in situ, on-site oder off-site durchgeführt werden kann.

Durch Extraktion, Adsorption, Oxidation, Reduktion oder Fällung können die in dem belasteten Boden enthaltenen Schadstoffe aus dem Boden gewaschen werden.

Ein Ziel des Bodenwaschverfahrens besteht darin, ein geschlossenes Reinigungssystem mit der Wiederverwertung der Reinigungsstoffe zu erreichen, wobei Reststoffe und Abwasser möglichst zu vermeiden sind. Eines der wichtigsten Anwendungsgebiete der Bodenwäsche ist die Reinigung des Bodens von Mineralölen, da die Aufteilung der Altlaststandorte zeigt, daß Mineralöl- und Mineralölprodukt-Standorte mengenmäßig am bedeutendsten sind. Hierzu zählen die Standorte von ehemaligen Tankstellen, die entsprechenden Umschlag- und Lagerplätze sowie die Standorte der chemischen Industrie.

Das oben erwähnte Ziel, die Erreichung geschlossener Reinigungssysteme, konnte bisher nicht erreicht werden, da bei bekannten Bodenwaschverfahren die Schadstoffe gemeinsam mit dem Feinkornanteil des Bodens ausgespült werden. Dabei entsteht neben belastetem Abwasser auch ein hochbelasteter, nur schwierig weiter zu verarbeitender Restanteil, der noch zu entsorgen ist. Ein Boden mit einem hohen Feinkornanteil ist aus diesem Grund mit herkömm-lichen Bodenwaschverfahren unter wirtschaftlichen Gesichtspunkten nicht zu reinigen. Die Reststoffe, z.B. Schadstoffkonzentrat oder koagulierter Schlamm, müssen z.B. auf Sondermülldeponien abgelagert werden.

Ein weiteres Problem stellen die zu verwendenden Reinigungsstoffe oder die Waschflüssigkeiten dar. Hier besteht ein Bedürfnis für umweltverträgliche Stoffe. Diese sollten z.B. mit biologischen Verfahren vollständig abbaubar sein, so daß Reste im gereinigten Boden unbedenklich sind.

Aufgrund der großen Zahl an Altlasten im mittleren Schadensbereich, z.B. die mit Mineralölen kontaminierten Standorte, besteht insbesondere ein Bedürfnis für mobile Bodenwaschanlagen, die wirtschaftlich und umweltverträglich arbeiten. Stationäre Bodenwaschanlagen kommen aufgrund der hohen Kosten hier nicht in Betracht. Die Effektivität der biologischen Sanierungsmaßnahmen ist zwar für kleine Schadensbereiche schon relativ gut, für den mittleren Schadensbereich sind jedoch die mikrobiologischen Verfahren noch nicht wirtschaftlich anwendbar.

Die Aufgabe der Erfindung besteht somit darin, ein wirtschaftliches und zugleich umweltverträgliches Verfahren für die Reinigung von kontaminierten Materialien, insbesondere von kontaminiertem Boden anzugeben, wobei die Reststoffraktion möglichst klein ist und ferner einfach und umweltverträglich entsorgt werden kann. Eine weitere Aufgabe der Erfindung besteht darin, eine mobile Anlage zur Reinigung von kontaminierten Materialien, insbesondere von kontaminierten Böden anzugeben, die insbesondere im mittleren Schadensbereich einfach, wirtschaftlich und umweltverträglich belasteten Boden, insbesondere mit Kohlenwasserstoffen belasteten Boden, sanieren kann.

Diese Aufgaben werden durch ein Verfahren gemäß den Merkmalen des Anspruchs 1 sowie durch eine mobile Anlage mit den Merkmalen des Anspruchs 14 gelöst.

Das Verfahren zur Reinigung von kontaminierten Materialien nach der Erfindung umfaßt die Bereitstellung einer tensidhaltigen Waschflüssigkeit und die Zuführung von kontaminierten Materialien in einen ersten Waschbehälter, in den auch die Waschflüssigkeit eingebracht wird.

In Abhängigkeit von der Art der kontaminierten Materialien können diese zuvor in einer Zerkleinerungseinrichtung zerkleinert werden. Wird z.B. kontaminierter Boden zugeführt, können größere Erdklumpen zunächst zerkleinert werden. Eine andere Einsatzmöglichkeit für das Verfahren nach der Erfindung ist die Reinigung von Gleisschotter. Bei Reparatur-, Umbau- und Erneuerungsmaßnahmen von Bahnstrecken kann das erfindungsgemäße Verfahren direkt vor Ort eingesetzt werden. Hierbei entfällt selbstverständlich die oben erwähnte Zerkleinerung des zu waschenden Schotters.

In Abhängigkeit von der Art des zu reinigenden Materials wird auch die Zuführung der unterschiedlichen Materialien von verschiedenen Einrichtungen durchgeführt. Die Beschickung kann z.B. bei Bauschutt oder Beton über eine Mühle- bzw. Brecheranlage erfolgen. Die Beschickung von Erdreichbodenaushub kann über einen Kastenbeschicker mit einem integrierten, hydraulisch betätigten Grobsieb als Zerkleinerer von Erd- oder Lehmklumpen erfolgen.

Die Zuführung der Materialien in den oben erwähnten Waschbehälter kann z.B. über Förderbänder erfolgen. Für diese Reinigung kann eine Sieb- und Zerkleinerungstrommel vorgesehen sein. Belasteter Boden kann nach dieser Ausführungsform des erfindungsgemäßen Verfahrens in eine im vorderen Bereich geschlossene Siebtrommel eingebracht werden. Dort können restliche Erdklumpen durch Zerhacker weiter zerkleinert werden. Im hinteren Bereich erfolgt dann die Mischung und das Besprühen mit der Waschflüssigkeit. Hierzu kann eine Sprühanlage vorgesehen sein. Bei dieser Erstreinigung werden die Grobteile des zu reinigenden Materials ausreichend gereinigt, so daß z.B. Grobteile über 60 mm 4) von den Feinteilen mittels eines Siebes getrennt werden können. Die Grobteile können dann gemäß Anspruch 2 über eine separate Wasserbesprühung und/oder Waschflüssigkeitsbesprühung auf einem separaten Förderband von den Feinteilen abgetrennt und z.B. in einen Container oder auf einen LKW geladen werden. Das vorgereinigte Restmaterial (Feinteile) wird dann einem zweiten Waschbehälter zugeführt, in den auch die Waschflüssigkeit eingebracht wird. Die Waschflüssigkeit wird vorzugsweise unter hohem Druck dem zweiten Waschbehälter zugeführt.

Bei diesem Verfahrensschritt ist insbesondere wichtig, daß das gesamte Material von der Waschflüssigkeit umspült wird. Hierzu kann eine kombinierte Misch- und Förderschnecke verwendet werden, wobei zunächst die Mischung der Feinteile mit der Waschflüssigkeit erfolgt und wobei die gereinigten Feinteile über die Förderschnecke abgetrennt und ggf. über ein weiteres Sieb geführt werden. Gemäß dieser Ausführungsform des Verfahrens nach der Erfindung transportiert die Förderschnecke in einem genau definierten Zeitablauf das gereinigte Material auf ein Förderband. Hier wird das Material mit Wasser und/oder Wascgflüssigkeit nachgespült und anschließend getrocknet, z.B. über ein Vakuumfilterband. Die so nach dem Verfahren behandelten Feinteile sind anschließend sofort wiederverwendbar.

Die Variante der Erfindung gemäß Anspruch 2 führt nach der Erstreinigung zu gereinigten Grobteilen und nach der Zweitreinigung zu gereinigten Feinteilen. Somit ist auch die Reinigung von Boden mit einem hohen Feinkornanteil in einfacher und umweltverträglicher Weise möglich, ohne daß ein hochbelasteter Restanteil, der noch zu entsorgen wäre, anfällt.

Die nach der Reinigung der Materialien bzw. der Grob- und Feinteile anfallende, dann die Schadstoffe aufweisende, z.B. Kohlenwasserstoffe, Waschflüssigkeit wird gemäß einem weiteren Schritt des Verfahrens nach der Erfindung gesammelt. Die Waschflüssigkeit kann mit einem Skimmer oder über eine Absaugung in ein Beruhigungsbecken transportiert werden. In diesem Beruhigungsbecken können die Freiöle mit bekannten Flockungsmitteln bearbeitet werden. Die Waschflüssigkeit kann ferner über einen Aktivkohlefilter geführt werden.

Zur weiteren Behandlung der Waschflüssigkeit und für die Abtrennung der Schadstoffe kann die Flüssigkeit aus dem Beruhigungsbecken zu einem Ölabscheider gefördert werden. Die abgetrennten Schadstoffe, z.B. Kohlenwasserstoffe, können dann in einem Ölbehälter gesammelt werden. Die Waschflüssigkeit aus dem Beruhigungsbecken kann alternativ einem UV-Oxidationsverfahren unterworfen werden. Die Förderung zu einem Ölabscheider entfällt dann. Bei dem Oxidationsverfahren werden die Kohlenwasserstoffe in C0₂ und H₂0 zerlegt.

Die Waschflüssigkeit wird gemäß einem weiteren Schritt des Verfahrens nach der Erfindung weiter behandelt, um ggf. eine Restmenge an Schadstoffen abzutrennen. Hierzu kann beispielsweise eine biologische Filtration oder eine saure Emulsionsspaltung durchgeführt werden. Bei der Emulsionsspaltung wird eine Emulsion in ihre beiden Phasen getrennt, indem der stabilisierende Film um die dispergierten Tröpfchen zerstört wird. Dies kann durch bekannte physikalische und/oder chemische Behandlung geschehen.

Die so endgültig gereinigte Waschflüssigkeit kann nun in den Verfahrenskreislauf wieder zurückgeführt werden. Eine Abgabe von erschöpfter Waschflüssigkeit an einen Abwassersammler ist nur am Ende des gesamten Reinigungsverfahrens oder bei großen Reinigungsvorgängen in definierten Zeitabständen erforderlich. Da die Schadstoffverteilung in der Waschflüssigkeit sehr fein ist, können insbesondere biologische Verfahren mit sehr guten Ergebnissen zur Abreinigung der Schadstoffe eingesetzt werden. Eine Einleitung des Abwassers in öffentliche Kanalnetze kann somit problemlos durchgeführt werden. Das Verfahren nach der Erfindung ist auch gemäß diesem Aspekt sehr umweltverträglich.

Die bei dem Verfahren nach der Erfindung zu verwendende Waschflüssigkeit enthält vorzugsweise zumindest ein amphoteres und ein nicht-ionisches Tensid. Vorteilhafterweise besteht die Waschflüssigkeit aus natürlichen pflanzlichen Grundstoffen und ist somit frei von synthetischen und toxischen Stoffen. Eine bevorzugte Waschflüssigkeit enthält Kokosamidobetain, Kokosfettsäure-Diethanolamid und Nonyphenol-Ethoxylat im Massenverhältnis von 25% : 65% : 10%. Diese Waschflüssigkeit ist pH-neutral, phosphatfrei und zu 99,6% nach OECD-Norm biologisch abbaubar.

Die Waschflüssigkeit kann nach einer weiteren Ausführungsform der Erfindung als Waschmittelkonzentrat bereitgestellt werden, das mittels einer Dosiereinrichtung mit Wasser im Verhältnis von 1:10 bis 1:30 gemischt wird.

Das beschriebene Verfahren gemäß Anspruch 2 führt zu einer gereinigten Grobteil- und Feinteilfraktion. Diese können selbstverständlich nach der Erst- bzw. Zweitreinigung wieder vereinigt und zusammen wiederverwertet werden bzw. wieder in ihren ursprünglichen Standort eingebracht werden. In Abhängigkeit von den zu verwendenden Abtrennmitteln, z.B. Sieben, können bei dem erfindungsgemäßen Verfahren ferner Reststoffe/Feinstanteile anfallen. Dieser Schlamm sollte vorzugsweise auch von der Waschflüssigkeit bzw. von den Schadstoffen abgetrennt werden, um auch diesbezüglich ein umweltverträgliches Verfahren zu erzielen. Dazu können die anfallenden Feinstanteile, die z.B. etwa 5-10% des Gesamtmaterials betragen können, bei den einzelnen Verfahrensschritten nach der Erfindung zurückgehalten werden, indem z.B. unter dem zweiten Waschbehälter und/oder unter dem Beruhigungsbecken und/oder unter dem Ölabscheider Absetzbecken für die Ablagerung des Schlammes bereitgestellt werden. Der abgesetzte Schlamm kann dann auf verschiedenste Weise behandelt werden. Der Schlamm kann beispielsweise mittels einer Kammerfilterpresse oder einer Siebbandpresse entwässert werden. Der erzielte Filterkuchen kann auf einer Deponie entsorgt oder thermisch behandelt werden. Gemäß weiteren Ausführungsformen der Erfindung wird der Schlamm über ein Rüttelsieb geführt und nochmals mit der Waschflüssigkeit bearbeitet. Die Feinstanteile können ferner mit einer Zentrifuge abgetrennt werden. Eine weitere Verfahrensweise ist die Verwirbelung mit Heißdampf. Der abgesetzte Schlamm kann insbesondere in Bioreaktoren mit speziell gezüchteten Mikroorganismen gereinigt werden. Aufgrund der guten Bioverträglichkeit der Waschflüssigkeit ist dies ohne weiteres möglich.

Das Verfahren nach der Erfindung ist insbesondere für die Eliminierung von Mineral-Kohlenwasserstoffen (MKW) aus Böden einsetzbar. Gemeinsam mit den MKW können auch polycyklische aromatische Kohlenwasserstoffe (PAK) sowie Schwermetalle aus dem Boden entfernt werden. Gerade die PAK können wegen ihrer geringen Wasserlöslichkeit durch bekannte Waschverfahren, die Wasser als Waschflüssigkeit verwenden, nur unzureichend entfernt werden. Mit dem Verfahren nach der Erfindung können übliche Böden, z.B. mit einem Feinkornanteil bis zu 30%, einfach, wirtschaftlich und umweltverträglich gewaschen werden, wobei nur äußerst geringe Restfraktionen anfallen, die zudem problemlos zu entsorgen sind.

Bei einer weiteren Ausführungsform des erfindungsgemäßen Verfahrens findet ein einziger Waschbehälter Verwendung, wobei die zugeführten Materialien auf einem Waschsieb und in einem nachfolgenden Waschbehälter mit der Waschflüssigkeit behandelt werden. Vorzugsweise werden die behandelten Materialien danach einer Nachwäsche mit einem Entwässerungssieb unterzogen.

Organische Bestandteile werden in Weiterbildung der Erfindung aus dem Waschbehälter ausgesiebt.

Die vom Waschbehälter abgezogene Waschflüssigkeit wird vorzugsweise vor ihrer Aufbereitung einer Trennung von gröberen Bestandteilen in einem Zyklon unterzogen.

Die Erfindung stellt ferner eine mobile Anlage zur Reinigung von kontaminierten Materialien, insbesondere von kontaminierten Böden bereit. Diese mobile Anlage, beispielsweise eine mobile Bodenwaschanlage, weist ein Fahrzeug und eine auf diesem Fahrzeug angeordnete Waschanlage auf. Die Waschanlage hat eine Zuführeinrichtung für die kontaminierten Materialien, eine Dosiereinrichtung für eine Waschflüssigkeit und mindestens einen Waschbehälter. In Weiterbildung sind eine erste und zweite Abtrenneinrichtung, eine Spül- und Trocknungseinrichtung für die gereinigten Materialien sowie ein Ölabscheider oder ein UV-Oxidationsbehälter und eine Wasseraufbereitungseinrichtung vorgesehen. Der Transport der zu reinigenden Materialien zu den einzelnen Anlagenteilen erfolgt mit Fördereinrichtungen, z.B. mit Förderbändern.

Als geeignetes Fahrzeug kann z.B. ein Tieflader mit einem Doppelboden (Auffangwanne) vorgesehen sein. Die mobile Anlage weist vorzugsweise ausfahrbare Stützen für die Entlastung der Radachsen auf und ist mittels Libellen in der Horizontalen ausrichtbar. Im vorderen Teil des Fahrzeuges kann die Zuführeinrichtung für die kontaminierten Materialien, z.B. ein Kastenbeschicker und ggf. ein Zerkleinerer, sowie die Dosiereinrichtung für die Waschflüssigkeit angeordnet sein, die auch den Vorratsbehälter für ein Waschmittelkonzentrat und für Wasser sowie einen Mischbehälter für die Mischung des Konzentrates mit Wasser aufweist. Von der Zuführeinrichtung können die Materialien mittels Förderbänder in den mittleren, oberen Teil des Fahrzeuges transportiert werden, wo der erste Waschbehälter mit einer Zerkleinerungstrommel, einer Siebtrommel und einer Sprühvorrichtung angeordnet ist. Unterhalb dieses ersten Waschbehälters kann der zweite Waschbehälter für die Zweitreinigung der Feinteile vorgesehen sein. Bei dieser Ausführungsform der Erfindung ist unterhalb des zweiten Waschbehälters, d.h. im mittleren unteren Abschnitt des Fahrzeuges, eine Spül- und Trocknungsvorrichtung für die gereinigten Feinteile vorgesehen. Von dort können die Feinteile über Förderbänder z.B. in einen Container oder auf einen LKW geladen werden. Die Einrichtungen für die Sammlung der Waschflüssigkeit sowie für die Abtrennung der Schadstoffe, z.B. eine Wasseraufbereitungsanlage, sowie ein Ölabscheider und ein Ölbehälter, sind nach einer weiteren Ausführungsform der Erfindung in dem hinteren Teil der mobilen Anlage auf dem Fahrzeug vorgesehen.

Die einzelnen Anlagenteile können somit derart angeordnet werden, daß sie auf einem Tieflader fest montierbar sind. Eine derartige mobile Bodenwaschanlage kann ohne weiteres eine Durchsatzmenge von 20 bis 30 Tonnen pro Stunde aufweisen. Die Anlage hat vorzugsweise ein Bedienpult sowie an mehreren Stellen Not-Aus-Schalter. Die bewegten Anlagenteile sind durch Schutzgitter oder Lichtschranken vor Zugriff während des Betriebs geschützt. Im Betrieb werden die einzelnen Anlagenteile in geeigneter Weise gesteuert und geregelt. Die Betriebsdaten können über eine EDV-Anlage erfaßt werden, wobei die Steuerung in Stufen oder stufenlos erfolgen kann. Die Dimensionierung der einzelnen Anlagenteile ist so ausgerichtet, daß die mobile Anlage im Transportzustand incl. Zugfahrzeug die von der Straßenverkehrssordnung vorgegebenen Maximalwerte nicht überschreitet. Über geeignete Hub- und Bewegungsmittel können die Anlagenteile vom Transportzustand in den Betriebszustand überführt werden. Die Rüstzeit beträgt nur wenige Stunden.

Die Anlage nach der Erfindung ist somit mobil und ist daher insbesondere für Altlasten des mittleren Schadensbereiches geeignet, bei denen biologische Waschverfahren nicht effektiv sind und bei denen stationäre Anlagen nicht wirtschaftlich betrieben werden können.

Ausführungsbeispiele der Erfindung werden im folgenden anhand von Zeichnungen beschrieben.
Figur 1 zeigt schematisch in Seitenansicht eine mobile Bodenwaschanlage nach der Erfindung im Betriebszustand.
Figur 2 zeigt schematisch in Seitenansicht die Bodenwaschanlage nach Figur 1 im Transportzustand.
Figur 3 zeigt die einzelnen Anlagenteile der Bodenwaschanlage nach Figur 1 zur Erläuterung des Verfahrens nach der Er findung.
Die Figuren 4 bis 7 zeigen einige Anlagenteile der mobilen Bodenwaschanlage in vergrößerter Darstellung.
Figur 8 zeigt eine Draufsicht auf eine andere Ausführungsform der mobilen Bodenwaschanlage nach der Erfindung.
Figur 9 zeigt eine Seitenansicht der mobilen Bodenwaschanlage gemäß Figur 8.
Figur 10 zeigt schematisch den Aufbau einer weiteren Ausführungsform einer erfindungsgemäß ausgebildeten Anlage.
Figur 11 zeigt ein mit der Anlage der Figur 10 versehenes Fahrzeug in der Seitenansicht und in der Draufsicht.

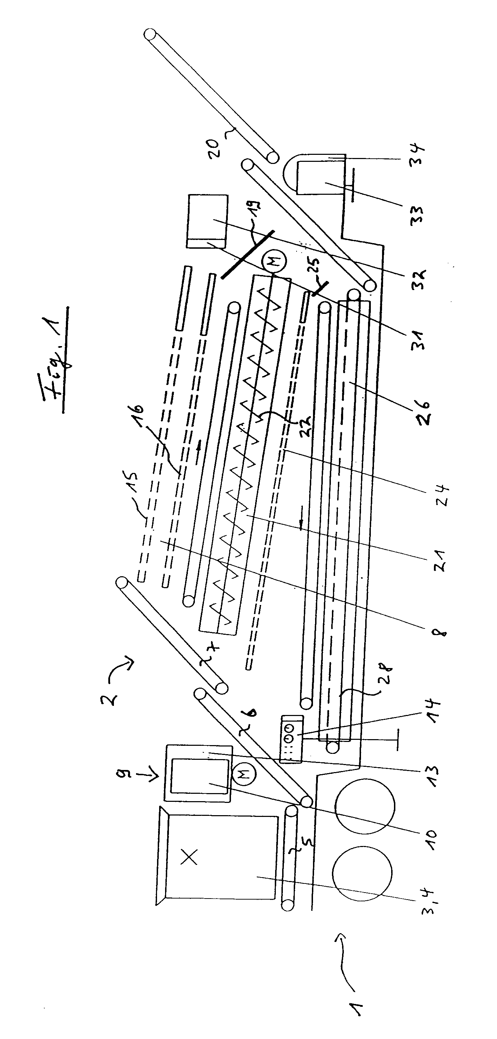

In Figur 1 ist ein Tieflader 1 dargestellt, auf dem eine Waschanlage 2 im Betriebszustand angeordnet ist. Der Tieflader 1 verfügt über eine Auffangwanne (nicht gezeigt). Im vorderen Bereich der Waschanlage 2 ist ein Zerkleinerer 3 und ein Kastenbeschicker 4 vorgesehen (Figur 5). Zugeführtes, belastetes Bodenmaterial wird zerkleinert und von dem Kastenbeschicker 4 über Förderbänder 5, 6, 7 zu einem ersten Waschbehälter 8 befördert, der im mittleren, oberen Teil der Waschanlage angeordnet ist.

Hinter dem Zerkleinerer 3 und dem Kastenbeschicker 4 ist eine Dosiereinrichtung 9 vorgesehen, die einen Vorratsbehälter 10 für ein Waschmittelkonzentrat, einen Vorratsbehälter für Wasser (nicht gezeigt), eine Waage 11 (siehe Figur 3) für das Abmessen einer definierten Menge des Waschmittelkonzentrats, eine Wasserzuleitung 12 und einen Mischbehälter 13 für die Herstellung einer zu verwendenden Waschflüssigkeit aufweist.

Unterhalb der Dosiereinrichtung 9 ist ein Bedienpult 14 für die Steuerung der gesamten Anlage vorgesehen.

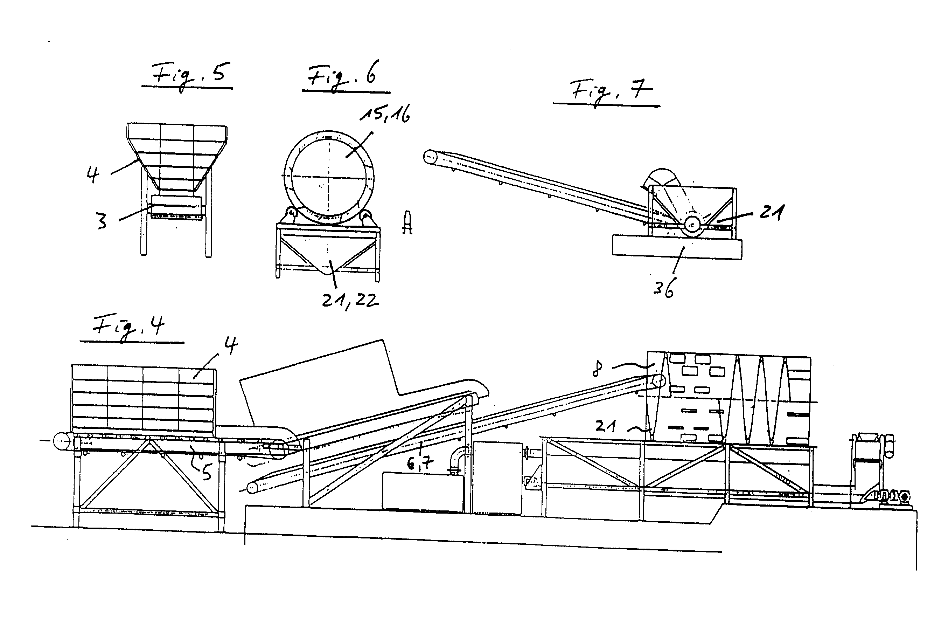

Der erste Waschbehälter 8 weist eine Zerkleinerungstrommel 15 und als erstes Trennmittel für die Grob- und Feinteile eine Siebtrommel 16 auf (Figur 6). Von dem Mischbehälter 13 führt eine Leitung 17 zu einer Sprühvorrichtung 18 (siehe Figur 3), die oberhalb des ersten Waschbehälters 8 angeordnet ist. Die mittels der Siebtrommel 16 abgetrennten Grobteile werden über ein Förderband 19 einem weiteren Förderband 20 zugeführt.

Die Feinteile werden von dem ersten Waschbehälter 8 zu einem zweiten Waschbehälter 21 gefördert, der eine Förderschnecke 22 aufweist. Das von der Förderschnecke 22 beförderte Material wird über ein Sieb 24 geführt. Zurückgehaltene Teile werden über ein Förderband 25 dem Förderband 20 zugeführt.

Im mittleren, unteren Abschnitt der Waschanlage 2 ist eine Spül- und Trocknungseinrichtung 26 mit einer Waschflüssigkeits-/Wassersprühvorrichtung 27 und einem Vakuumfilterband 28 angeordnet. In diesem Bereich ist ferner ein Beruhigungsbecken 29 zur Aufnahme der von dem zweiten Waschbehälter 21 über eine Leitung 30 zugeführten Waschflüssigkeit.

Im hinteren Abschnitt der Waschanlage 2 sind ein Ölabscheider 31, eine Wasseraufbereitungsanlage 32, ein Ölbehälter 33 und ein Stromaggregat 34 vorgesehen. Die entsprechenden Zu- und Ableitungen sind in der Figur 1 nicht dargestellt. Eine separate Waschflüssigkeits-/Wassersprühvorrichtung 35 für die abgetrennten Grobteile nach der Erstreinigung in dem ersten Waschbehälter 8 sowie Absetzbecken 36 für die Feinstanteile sind ebenfalls in der Figur 1 nicht gezeigt.

Die Anordnung eines Absetzbeckens 36 unterhalb des zweiten Waschbehälters zeigt die Figur 7.

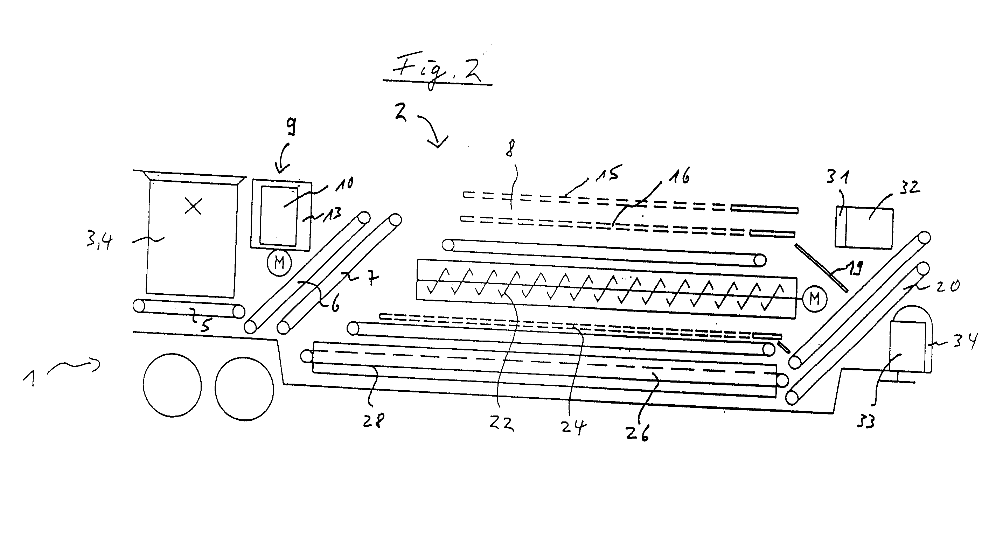

Figur 2 zeigt die Anordnung der oben beschriebenen Anlagenteile im Transportzustand der mobilen Anlage 2. Die maximalen Abmessungen der Anlage incl. Zugfahrzeug im Transportzustand sind aufgrund der Straßenverkehrsordnung: Länge - 16 m, Breite - 2,5 m und Höhe - 4,0 m, wobei die maximalen Abmessungen der Anlage selbst ohne Fahrzeug 13,5 m (Länge), 2,5 m (Breite) und 2,7-3,0 m (Höhe) betragen. Die Durchsatzmenge einer solchen Anlage liegt zwischen 20 und 30 Tonnen pro Stunde bei Reinigung von Boden, der mit Mineral-Kohlenwasserstoffen verunreinigt ist.

Im folgenden wird das Verfahren anhand der Figur 3 näher beschrieben.

Bodenmaterial, das z.B. mit Mineral-Kohlenwasserstoffen kontaminiert ist, wird am Altlastenstandort ausgebaggert und der in Nähe zu dem Standort aufgestellten, mobilen Bodenwaschanlage zugeführt. Die Beschickung des Erdreichbodenaushubs erfolgt über den Kastenbeschicker 4 mit einem integrierten hydraulisch betriebenen Grobsieb als Zerkleinerer 3 für Erd- oder Lehmklumpen. Dieses Material wird kontinuierlich über die Förderbänder 5, 6, 7 in die Sieb- und Zerkleinerungstrommel 15, 16 befördert. Im vorderen Bereich ist diese Siebtrommel geschlossen und weist Zerhacker auf, um die restlichen Erdklumpen zu zerkleinern. Im hinteren Bereich erfolgt die Mischung und das Besprühen als Erstreinigung mit der Waschflüssigkeit. Diese Waschflüssigkeit wird von dem Mischungsbehälter 13 über die Leitung 17 zu der Sprühvorrichtung 18 geführt.

Der Mischungsbehälter 13 wird von einem Vorratsbehälter 10, der das Waschmittelkonzentrat enthält, sowie von einer Wasserleitung 12 gespeist. Mittels einer Waage 11 wird die notwendige Menge des Waschmittelkonzentrats gewogen, um ein Mischungsverhältnis mit Wasser im Bereich von 1:10 bis 1:30 zu erzielen. Für die Zuführung des Waschmittelkonzentrats sowie des Wassers in den Mischungsbehälter 13 sind in den entsprechenden Leitungen Pumpen 40, 41, 42 vorgesehen.

In den ersten Waschbehälter 8 mit der Sieb- und Zerkleinerungstrommel 15, 16 wird eine Erstreinigung des kontaminierten Bodenmaterials durchgeführt. Grobteile, z.B. solche mit einem Durchmesser von mehr als 60 mm, werden bei dieser Erstreinigung vollständig und endgültig gereinigt. Über eine separate Wasserbesprühung (in der Figur 3 nicht gezeigt) werden diese Grobteile auf dem Förderband 19 und von dort auf dem Förderband 20 aus der Anlage auf einen LKW 43 gefördert.

Das vorgereinigte Restmaterial (Feinteile) fällt durch die Siebtrommel in den darunter angeordneten zweiten Waschbehälter 21. In diesem Waschbehälter wird unter hohem Druck ebenfalls über die Dosiereinrichtung 9 und mittels der Leitung 23 die Waschflüssigkeit eingebracht. Wesentlich bei diesem Verfahrensschritt ist, daß das gesamte Bodenmaterial von der Waschflüssigkeit umspült wird. Der zweite Waschbehälter 21 ist mit einer kombinierten Misch- und Förderschnecke 22 ausgerüstet. Die Förderschnecke transportiert in einem genau definierten Zeitablauf das gereinigte Material zu einem Feinsieb 24. Die dabei abgetrennten Feinteile werden über das Förderband 25 dem Förderband 20 zugeführt. Die restlichen Feinteile werden der Spül- und Trocknungseinrichtung 26 zugeführt, die eine Wassersprühvorrichtung 27 und ein Vakuumfilterband 28 für die Trocknung der Feinanteile aufweist. Das so gereinigte, gespülte und getrocknete Material kann dann sofort wiederverwendet werden.

Die freigesetzte, kontaminierte Waschflüssigkeit in dem zweiten Waschbehälter 21 wird mit einem Skimmer über die Leitung 30 in das Beruhigungsbecken 29 geführt. In diesem Beruhigungsbecken erfolgt eine Behandlung der in der Waschflüssigkeit vorliegenden Freiöle mit einem Flockungsmittel. Geeignete Flockungsmittel für die Aggregation zu sedimentierbaren und/oder abfiltrierbaren Flocken sind bekannt. Aus dem Beruhigungsbecken wird die Flüssigkeit zu dem Ölabscheider 31 gefördert. Die abgeschiedenen Kohlenwasserstoffe werden in dem Ölbehälter 33 gesammelt. Eine nachgeschaltete, biologische Filtration oder eine saure Emulsionsspaltung wird in der Wasseraufbereitungsanlage 32 durchgeführt, wodurch das Wasser bzw. die restliche Waschflüssigkeit endgültig gereinigt wird, so daß eine Rückführung über die Leitung 44 in den Anlagenkreislauf möglich ist. Die noch bei dem letzten Reinigungsschritt anfallenden Kohlenwasserstoffe werden in einem separaten Behälter zur endgültigen Entsorgung gesammelt (nicht gezeigt). An geeigneten Stellen sind bei der mobilen Waschanlage in den Leitungen zur Beförderung der entsprechenden Flüssigkeiten Pumpen 45a-g vorgesehen.

Zur Durchführung des oben beschriebenen Verfahrens weist die mobile Bodenwaschanlage ferner ein Stromaggregat auf, um vom öffentlichen Stromnetz unabhängig zu sein. Die elektrische Steuerung der gesamten Anlage ist in einem Schaltschrank untergebracht. Ferner ist ein Bedienpult vorgesehen.

Die allerletzten Feinstanteile, die sich in der Anlage befinden, können auf verschiedene Weise dekontaminiert werden. Solche Anteile können z.B. einen Durchmesser von weniger als 100 um aufweisen. Dieser Schlamm kann in Absatzbecken 36 zurückgehalten werden, die unter dem zweiten Waschbehälter, unter dem Beruhigungsbecken und/oder im Ölabscheider vorgesehen sind. Die Behandlung des abgesetzten Schlammes kann auf verschiedene Weise erfolgen. Der Schlamm kann in Bioreaktoren mit speziell gezüchteten Mikroorganismen gereinigt werden oder er kann mittels einer Siebbandpresse entwässert werden. Der entstehende Filterkuchen kann thermisch behandelt oder in einer Deponie entsorgt werden. Ferner kann der abgesetzte Schlamm nochmals mit der Waschflüssigkeit bearbeitet werden. Weitere Verfahrensweisen schließen die Verwendung eines Zyklons, einer Zentrifuge oder die Verwirbelung mit Heißdampf ein. Der abgesetzte Schlamm könnte ferner chemisch weiter bearbeitet werden.

Zu Beginn des Verfahrens wird nur eine bestimmte Menge der Waschflüssigkeit vorgegeben. Diese Füllung wird zunächst im Kreislauf (etwa eine halbe Stunde) geführt. Danach kann das kontaminierte Erdreich gemäß obiger Beschreibung zugeführt werden. Alle Anlagenteile, die mit der Waschflüssigkeit in Berührung kommen, sind vorzugsweise aus Edelstahl oder einer entsprechenden Legierung hergestellt.

Um einen optimalen Ablauf des oben beschriebenen Verfahrens zu erzielen, können beispielsweise die folgenden Größen gemessen und gesteuert werden: Menge der zugeführten kontaminierten Erde, Volumen und Volumenstrom des Waschmittelkonzentrats, Volumenstrom des dem Mischbehälter zugeführten Wassers, Volumenstrom der fertigen Waschflüssigkeit zu dem ersten und/oder zweiten Waschbehälter, Höhe des Flüssigkeitsspiegels in dem zweiten Waschbehälter, Volumenstrom des im Bandfilter versprühten Wassers, Volumen des vom Wasser abgeschiedenen Öls, Volumenstrom des abgeführten Wassers, etc.

Diese und andere Betriebsarten können über eine EDV-Anlage erfaßt und stufenlos oder in Stufen gesteuert werden. Eine separate Steuerung und Schaltung ist ferner für die Misch- und Förderschnecke notwendig. Bei Arbeitsbeginn sollte kurzzeitig nur die Mischschnecke laufen.

Die bei dem Verfahren anzuwendende Waschflüssigkeit besteht aus einer Mischung des Waschmittelkonzentrats mit Wasser im Verhältnis 1:10 bis 1:30. Die individuell auf die Bodenbeschaffenheit einzustellende Konzentration ist abhängig von der Korngrößenverteilung im Schüttgut, der freien Oberfläche des Materials, der Schadstoffart sowie von der Schadstoffkonzentration. Die Waschflüssigkeit kann insbesondere zur Reinigung von Mineral-Kohlenwasserstoffen aus Boden, rieselfähigen Stoffen, Schlämmen oder zur Abwasserreinigiung benutzt werden. Die Wirkungsweise der Waschflüssigkeit beruht insbesondere auf der Wirkung der Tenside, wobei die Waschflüssigkeit vorzugsweise ein amphoteres und mindestens ein nicht-ionisches Tensid enthält. Die Schadstoffe werden in feiner Verteilung in die Waschflüssigkeit aufgenommen und über diesen Weg ausgespült.

Die Waschflüssigkeit besteht insbesondere aus natürlichen, pflanzlichen Grundstoffen und ist somit aufgrund dieser Zusammensetzung mit biologischen Verfahren vollständig abbaubar, so daß Reste im gereinigten Boden unbedenklich sind. Diese werden im natürlichen Abbau durch Mikroorganismen beseitigt. Wie oben erläutert, wird die Waschflüssigkeit mit dem gereinigten Wasser in den Anlagenkreislauf teilweise zurückgeführt. Über die Dosiereinrichtung wird kontinuierlich das Mischverhältnis dem verbliebenen Tensidanteil angepaßt. Eine Abgabe von erschöpfter Waschflüssigkeit an einen Abwassersammler ist am Ende des gesamten Reinigungsvorhabens sowie bei größeren Reinigungsvorgängen in Zeitabständen erforderlich.

Eine geeignete Waschflüssigkeit sollte im wesentlichen ein amphoteres Tensid und zwei nicht-ionische Tenside aufweisen, z.B. ein Kokosamidobetain, ein Kokosfettsäure-Diethanolamid und Nonylphenol-Ethoxylat. Diese drei Komponenten liegen bei der bevorzugten Waschflüssigkeit in einem Verhältnis von 25% : 65% : 10% vor. Dieses wäßrige Tensidgemisch ist pH-neutral, phosphatfrei und zu 99,6% biologisch abbaubar.

Anhand von Versuchen mit Mineralöl-kontaminiertem Boden wurde die sehr gute Effektivität dieser Waschflüssigkeit für die Bodenwäsche bestimmt. Die Mineralölbelastung eines nach dem Verfahren behandelten Bodens sank um über 99%.

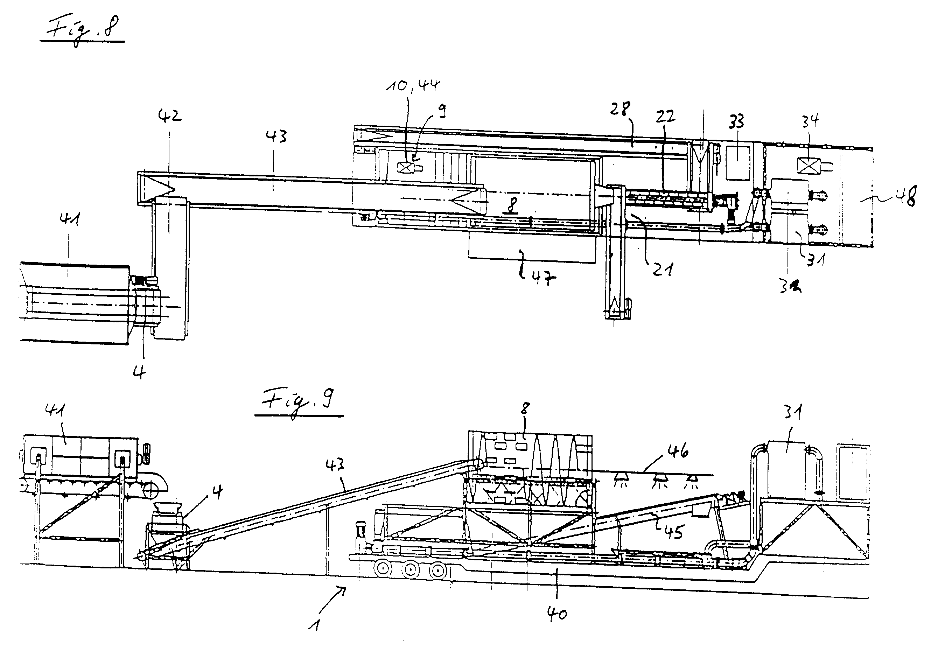

Die Figuren 8, 9 zeigen eine weitere Ausführungsform der mobilen Bodenwaschanlage. Gleiche Anlagenteile wie in der oben beschriebenen Ausführungsform sind mit gleichen Bezugsziffern gekennzeichnet.

Vor einem Tieflader 1, der eine Auffangwanne 40 aufweist, ist ein Kastenbeschicker 4 im Betriebszustand der mobilen Waschanlage angeordnet. Für die Beschickung der Anlage mit Bauschutt und Beton etc. ist eine Mühlen-Brecheranlage 41 vorgesehen, mit der zerkleinertes Material dem Kastenbeschicker 4 zugeführt und von dort über Förderbänder 42, 43 zu einem ersten Waschbehälter 8 gefördert wird, der eine Sieb- und Zerkleinerungstrommel aufweist.

Im vorderen Teil des Tiefladers ist eine Dosiereinrichtung 9 mit Vorratsbehältern 10, 44 für Wasser und Waschkonzentrat angeordnet. Die Dosiereinrichtung 9 weist im übrigen die anderen Komponenten gemäß der ersten Ausführungsform (Figuren 1 bis 3) auf.

Unterhalb des ersten Waschbehälters 8 ist ein weiterer Waschbehälter 21 gemäß der ersten Ausführungsform vorgesehen. Im mittleren Abschnitt des Tiefladers sind ferner ein Vakuumfilterband 28 und eine Waschflüssigkeits-/Wassersprühvorrichtung 27 angeordnet. Diese dienen der Spülung und Trocknung der Feinanteile. Die über ein Förderband 45 aus der Anlage geförderten Materialien können ferner mittels einer Nachspüleinrichtung 46 nochmals gereinigt werden.

In Figur 8 ist ferner schematisch eine Siebbandpresse 47 für die Entwässerung des in den Absetzbekken 36 gesammelten Schlammes dargestellt.

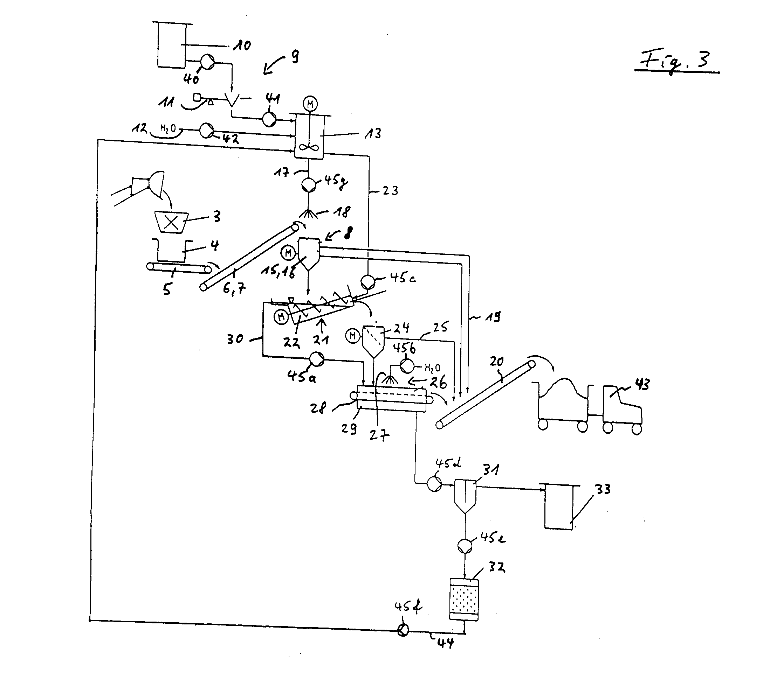

Im hinteren Abschnitt des Tiefladers 1 sind ein Ölabscheider 31, eine Wasseraufbereitungsanlage 32, ein Ölbehälter 33, ein Stromaggregat 34 sowie ein Schaltschrank 48 angeordnet. Die Ausführungsform gemäß den Figuren 8, 9 weist darüber hinaus die übrigen Anlagenteile gemäß der Ausführungsform der Figuren 1 bis 7 auf.

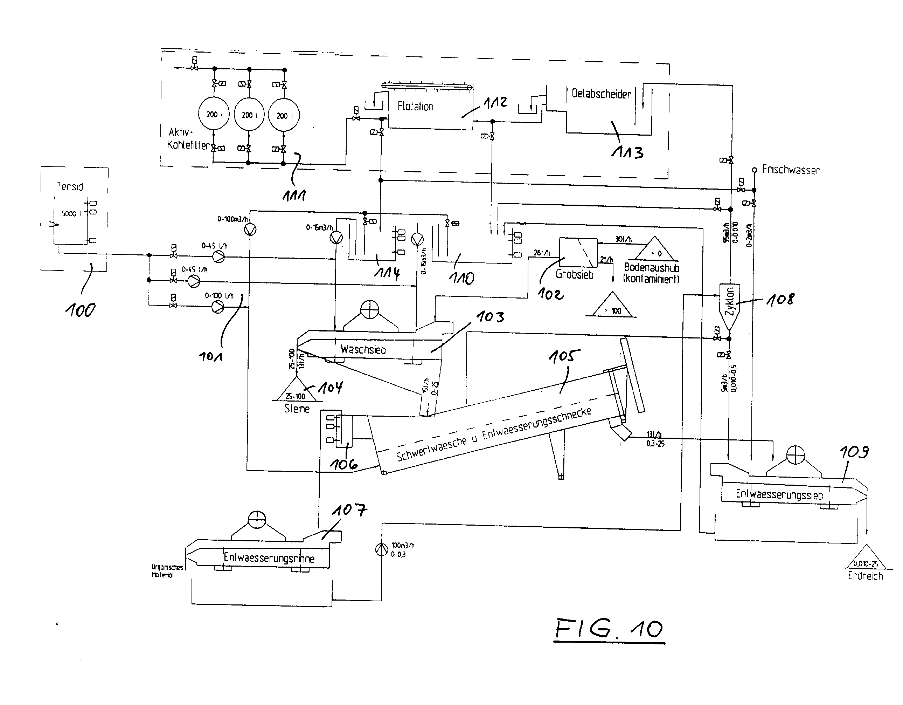

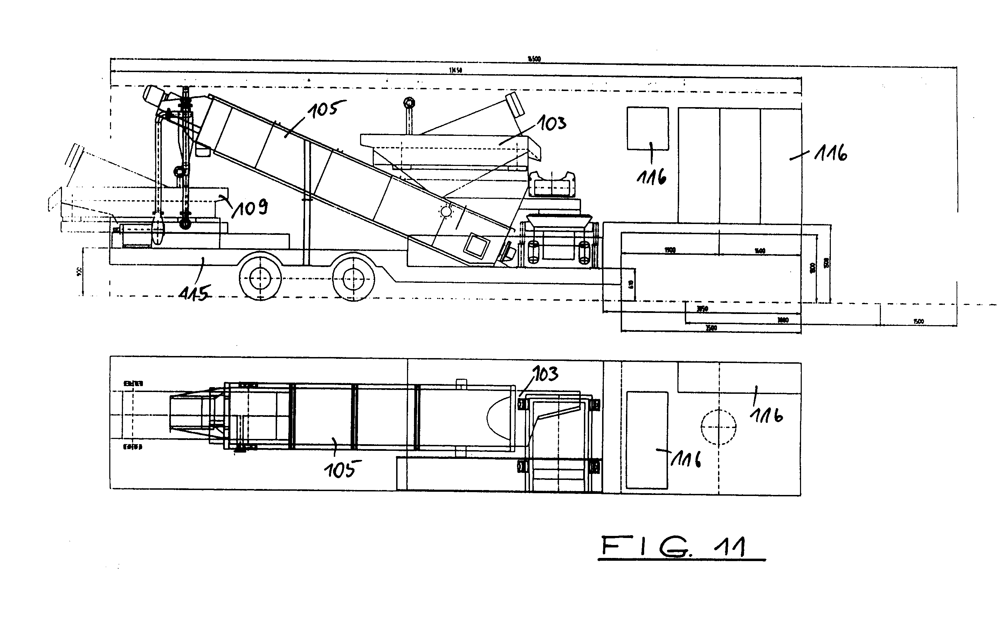

Die in den Figuren 10 und 11 dargestellte mobile Bodenwaschanlage besteht aus drei Einzelkomponenten, die einzeln und unabhängig transportiert und zum Teil auch betrieben werden können:
1. einer Waschanlage auf Sattelauflieger einschließlich aller zum Betrieb notwendigen Aggregate mit Ausnahme der Wasseraufbereitung.
2. einem Beruhigungsbecken und einem Ölabscheider als Vorreinigungsstufe für das Prozeßwasser.
3. einer Flotationsanlage zur vollständigen Reinigung des Prozeßwassers einschließlich Sicherheitsstufe als Aktivkohlefilter.

In Figur 10 sind das Aktivkohlefilter 111, die Flotationsanlage 112 und der Ölabscheider 113 in einem gestrichelt dargestellten eingegrenzten Bereich gezeigt. Diese Teile könnten getrennt von der eigentlichen mobilen Anlage angeordnet sein. Gleiches trifft für die dargestellten Beruhigungsbecken 110 und 114 zu.

Die Gesamtanlage besteht aus folgenden Baugruppen:

### 1. Materialaufgäbe mit Grobsieb 102

Statischer Stangensizer 2000 breit über Vibrationsrinne, Trennschnitt ca. 100 mm. Die Vibrationsrinne ist mit einem auf Stegen lose eingelegten Gummituch ausgekleidet. Austragsmengenregelung über Drehzahlvariation der Vibrationsantriebe. Beide Einheiten im gemeinsamen Gestell. Transport auf Sattelauflieger.

### 2. Beschickung der Waschanlage

Gemuldetes Transportband 650 breit und 9 m lang mit Bandwaage zur Mengenkontrolle. Transport auf Sattelauflieger.

### 3. Waschanlage

Komplett auf Sattelauflieger montiert. Auflieger 13,45 m lang, 2,5 m breit, 4 m Gesamthöhe, 30 t Gesamtgewicht. EU-Ausnahmegenehmigung erforderlich.

### 3.1 Waschsieb 103

Entwässerungssieb mit Kaskadensiebbelag zum intensiven Auswaschen von Erde und Schlamm. Trennschnitt 25 mm. Durchsatz 28 t max., Waschwasser 25m3/h max. Montiert über Schneckenwäscher mit Trichter zum gezielten Beschicken des Schneckenwäschers.

### 3.2 Schneckenwäscher 105

Konbinierte Schwertwäsche und Schneckenentwässerer zum Waschen und Entwässern des Bodens. Schwerter im vorderen Bereich variabel zur Erzielung eines optimalen Waschergebnisses. Wasserzuführung von unten. Wasserüberlauf direkt in Entwässerungssieb.

### 3.3 Entwässerungssieb 107 für organische Verunreinigungen

Vibrationsentwässerungssieb mit 0,5 mm Trennschnitt, angeordnet im Auslauf des Überlaufwassers der Waschschnecke. Ausgesiebte organische Bestandteile werden seitlich ausgetragen in Auffangcontainer mit Entwässerung. Das Wasser wird in einem Auffangbehälter gesammelt und der Pumpstation zum Zyklon zugeführt.

### 3.4 Entwässerungssieb 109 nach Waschschnecke

Vibrationsentwässerungssieb mit 0,5 mm Trennschnitt und Besprühung zum Nachwaschen. Zum Entwässern des Schneckenaustrags sowie des Zyklonunterlaufs. Das Sieb wird zum Betrieb um 1,2 m nach hinten aus der Anlage geschoben. Das Wasser wird in einem Auffangbehälter gesammelt und der Wasseraufbereitung zugeführt.

### 3.5 Pumpanlage 2

Eine Drehkolbenpumpe erzeugt den für den Zyklon notwendigen Druck. Fördermengenregelung über Verstellgetriebemotor, da der Zyklon mit konstantem Volumen betrieben werden soll.

### 3.6 Zyklonanlage 108

Ein Zyklon, Trennschnitt ca. 30 um, trennt gröbere Anteile aus dem Waschwasser, bevor es in die Aufbereitung geht. Unterlauf des Zyklons wahlweise auf Entwässerungssieb bzw. in die Waschschnecke zurück. Überlauf wird der Wasseraufbereitung zugeführt.

### 3.7 Schaltanlage 116

Im Schaltschrank auf dem Sattelauflieger sind alle Steuer- und Regelungsorgane zum Betrieb der Anlage installiert. Vorgesehen ist eine SPS-Steuerung mit eienr interaktiven Bedienkonsole, an der Rezepte eingegeben und überwacht werden können. Betriebs-, Stör- und Zustandsanzeigen sind einprogrammiert. Das Steuerungskonzept wird gesondert dargestellt.

### 3.8 Stromaggregat 116

Ein Notstromaggregat auf dem Sattelauflieger versorgt die Anlage unabhängig mit elektrischer Energie.

### 3.9 Austragsbänder für gewaschene Steine und Boden

Je ein gemuldetes Förderband ca. 650 mm breit und 9 m lang befördert die gewaschenen Fraktionen auf Halde. Transport auf Sattelauflieger.

### 4. Wasseraufbereitung

Drei Stufen, bestehend aus Ölabscheider 113 und Beruhigungsbecken 110, nachgeschalteter Flotation 112 und Filterstufe als Schußkontrolle.

### 4.1 Ölabscheider 113

Koaleszenzabscheider als Ölabscheider in Container montiert. Beschickung mit Wasser aus Überlauf des Zyklons. Auffangbecken nachgeschaltet.

### 4.2 Flotation 112

Mehrkammerflotation als endgültige Reinigungsstufe vor Ablauf des Waschwassers in die Kanalisation, mit Polyelektrolytedosierung, Flotaträumer, Entwässerungsband und Flotatentwässerungscontainer.

### 4.3 Aktivkohlefilter 111

Aktivkohlefilter als Sicherheitsstufe vor Ablaß in die Kanalisation.

### 4.4 Pumpstation 1

3 Kreiselpumpen versorgen Siebe und Schnecke mit den notwendigen Mengen und Drücken. Frischwasserzugabe erfolgt bei Bedarf hier. Mengenregelung über induktive Durchflußmengenmessung und Regelventile.

### 5. Tensidlagerung und Mischstation

Separater Tankwagen hält Tensidmenge von minimal 5000 1 vor. Tank geheizt. Dosierung in Zuführleitungen Waschwasser mit statischer Mischstrecke, proportional der Wassermenge und des gewünschten Mischungsverhältnisses.

### 6. Entschäumerdosierung

Vorratsstation mit Dosierpumpe zum Zudosieren, gesteuert durch Schaummeßköpfe an Schneckenwascher und Ölabscheider.

### 7. Mengenmessungen

Zur Kontrolle der Wasserzusammensetzung und des Tensid-Wasser-Gemischverhältnisses sind drei induktive Durchflußmengenmessungen vorgesehen.

Bei der vorstehend beschriebenen Ausführungsform ist der Schneckenwäscher vorzugsweise als offene Wanne ausgebildet.

Vorzugsweise findet als Waschflüssigkeit eine solche Verwendung, die das nachfolgende Tensidgemisch enthält.

Die erste Komponente des Tensidgemisches ist ein amphoteres Tensid des Typs Kokosamidobetain, das je nach pH-Einstellung des Gemisches anionisch oder kationisch reagiert. Die Komponente hat die folgende Struktur: 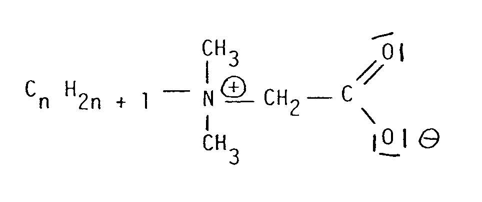
wobei n die Werte 9 - 18 annehmen kann.

Die zweite Komponente ist ein nicht-ionisches Tensid, und zwar ein tertiäres Amin des Typs Kokosfettsäurediethanolamid. Dieser Tensidtyp gilt in der Anwendung als "Booster" (Schäumer) und hat folgende Struktur: 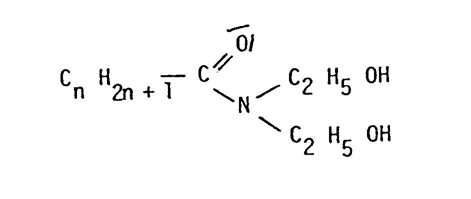
wobei n die Zahlen von 9 - 16 annehmen kann.

Die dritte Komponente ist ebenfalls ein nicht-ionisches Tensid des Typs Nonylphenol-ethoxylat und hat die folgende Struktur: 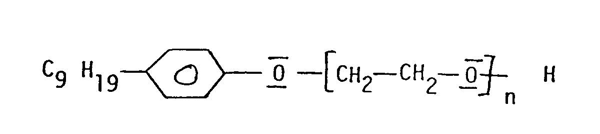
wobei n die Werte zwischen 3 - 10 annehmen kann.

Das Tensidgemisch besitzt vorzugsweise folgende Anteile:
ca. 25 % Kokosamidobetain
ca. 65 % Kokosfettsäure-diethanolamid
ca. 10 % Nonylphenol-ethoxylat.

## Patentansprüche

1. Verfahren zum Reinigen von kontaminierten Materialien, insbesondere von kontaminiertem Boden, wobei das Verfahren die folgenden Schritte beinhaltet:
a) Bereitstellen einer tensidhaltigen Waschflüssigkeit,
b) Zuführen von kontaminierten Materialien, die gegebenenfalls in einer Zerkleinerungseinrichtung zuvor zerkleinert werden, in einen Waschbehälter, in den auch die Waschflüssigkeit eingebracht wird,
c) Behandeln der zugeführten Materialien mit der Waschflüssigkeit,
d) Abtrennen, Spülen mit Wasser und/oder Waschflüssigkeit und gegebenenfalls Trocknen der gereinigten Materialien, die anschließend wiederverwertbar sind,
e) Sammeln der kontaminierten Waschflüssigkeit und Abtrennen der Schadstoffe,
f) Wiederaufbereiten der Waschflüssigkeit und gegebenenfalls Zurückführen der gereinigten Flüssigkeit zur Wiederverwertung in Schritt (a).

2. Verfahren nach Anspruch 1, dadurch gekennzeichnet, daß es die folgenden zusätzlichen Schritte umfaßt:
Trennen von Grobteilen und Feinteilen der behandelten Materialien und Abführen der Grobteile aus dem weiteren Verfahrensablauf nach dem Behandeln der Materialien mit der Waschflüssigkeit,
Zuführen der Feinteile in einen zweiten Waschbehälter, in den auch die Waschflüssigkeit eingebracht wird, und
Umspülen der Feinteile mit der Waschflüssigkeit.

3. Verfahren nach Anspruch 1 oder 2, dadurch gekennzeichnet, daß eine Waschflüssigkeit verwendet wird, die zumindest ein amphoteres und ein nicht-ionisches Tensid enthält.

4. Verfahren nach einem der vorangehenden Ansprüche, dadurch gekennzeichnet, daß in Schritt (b) der kontaminierte Boden in eine Siebtrommel eingebracht wird, in der Zerhacker die restlichen Erdklumpen weiter zerkleinern, und das zerkleinerte Bodenmaterial anschließend im Waschbehälter besprüht wird.

5. Verfahren nach einem der Ansprüche 2 bis 4, dadurch gekennzeichnet, daß die Feinteile über ein Trommelsieb von den Grobteilen abgetrennt und in einen darunter angeordneten, zweiten Waschbehälter überführt werden.

6. Verfahren nach einem der Ansprüche 2 bis 5, dadurch gekennzeichnet, daß der verwendete zweite Waschbehälter eine kombinierte Misch- und Förderschnecke aufweist, wobei zunächst die Mischung der Feinteile mit der Waschflüssigkeit erfolgt und die gereinigten Feinteile über die Förderschnecke abgetrennt, über ein Feinsieb geführt und anschließend gegebenenfalls mit Wasser und/oder Waschflüssigkeit besprüht werden.

7. Verfahren nach einem der vorangehenden Ansprüche, dadurch gekennzeichnet, daß die kontaminierte Waschflüssigkeit in einem Beruhigungsbecken gesammelt wird, das ein Flockungsmittel für die Behandlung der Freiöle, die in der kontaminierten Waschflüssigkeit vorliegen, und wahlweise einen Aktivkohlefilter enthält.

8. Verfahren nach Anspruch 7, dadurch gekennzeichnet, daß die Waschflüssigkeit aus dem Beruhigungsbecken zu einem Ölabscheider geführt oder einem UV-Oxidationsverfahren unterworfen wird.

9. Verfahren nach einem der vorangehenden Ansprüche, dadurch gekennzeichnet, daß die Waschflüssigkeit durch eine biologische Filtration, eine Emulsionsspaltung oder in einer Klein-Kläranlage wiederaufbereitet wird.

10. Verfahren nach einem der Ansprüche 1, 3, 7, 8 oder 9, dadurch gekennzeichnet, daß die zugeführten Materialien auf einem Waschsieb und in einem nachfolgenden Waschbehälter mit der Waschflüssigkeit behandelt werden.

11. Verfahren nach Anspruch 10, dadurch gekennzeichnet, daß die behandelten Materialien einer Nachwäsche mit einem Entwässerungssieb unterzogen werden.

12. Verfahren nach Anspruch 10 oder 11, dadurch gekennzeichnet, daß organische Bestandteile aus dem Waschbehälter ausgesiebt werden.

13. Verfahren nach einem der Ansprüche 10 bis 12, dadurch gekennzeichnet, daß die vom Waschbehälter abgezogene Waschflüssigkeit vor ihrer Aufbereitung einer Trennung von gröberen Bestandteilen in einem Zyklon unterzogen wird.

14. Mobile Anlage zur Reinigung von kontaminierten Materialien, insbesondere von kontaminiertem Boden, dadurch gekennzeichnet, daß ein Fahrzeug (1, 115) und eine auf diesem Fahrzeug angeordnete Waschanlage (2) vorgesehen sind, wobei die Waschanlage eine Zuführeinrichtung (3, 41; 4) für die kontaminierten Materialien, eine Dosiereinrichtung (9, 101) für eine Waschflüssigkeit, mindestens einen Waschbehälter (8, 105) für die kontaminierten Materialien sowie Fördereinrichtungen (5, 6, 7, 19, 20, 25) für den Transport der Materialien zu den einzelnen Anlageteilen aufweist.

15. Anlage nach Anspruch 14, dadurch gekennzeichnet, daß sie eine erste Abtrenneinrichtung (16), um Grob- und Feinteile der kontaminierten Materialien zu trennen, einen zweiten Waschbehälter (21) für die Feinteile, eine zweite Abtrenneinrichtung (24), um die Feinteile von der Waschflüssigkeit zu trennen, und eine Spül- und Trocknungseinrichtung (26) für die gereinigten Feinteile aufweist.

16. Anlage nach Anspruch 14 oder 15, dadurch gekennzeichnet, daß die Dosiereinrichtung (9) einen Vorratsbehälter (10, 44) für ein Waschmittelkonzentrat sowie für Wasser, eine Waage (11) für die Bestimmung einer definierten Menge des Konzentrats, eine Wasserzuleitung (12) und einen Mischbehälter (13) für das Mischen des Wassers mit dem Konzentrat aufweist.

17. Anlage nach einem der Ansprüche 14 bis 16, dadurch gekennzeichnet, daß die Zuführeinrichtung für die kontaminierten Materialien einen Zerkleinerer (3, 41) und einen Kastenbeschicker (4) aufweist.

18. Anlage nach einem der Ansprüche 14 bis 17, dadurch gekennzeichnet, daß der Waschbehälter (8) für die kontaminierten Materialien eine Zerkleinerungstrommel (15) und eine Sprühvorrichtung (18) für die Waschflüssigkeit aufweist.

19. Anlage nach einem der Ansprüche 15 bis 18, dadurch gekennzeichnet, daß die erste Abtrenneinrichtung eine Siebtrommel (16) und die zweite Abtrenneinrichtung ein Feinsieb (24) oder ein Filter ist.

20. Anlage nach einem der Ansprüche 14 bis 19, dadurch gekennzeichnet, daß das Fahrzeug (1, 115) eine Auffangwanne (40) aufweist.

21. Anlage nach einem der Ansprüche 14 bis 20, dadurch gekennzeichnet, daß sie ein Beruhigungsbecken (29) für die kontaminierte Waschflüssigkeit, ein Absetzbecken (36) für Feinstanteile und eine Wasseraufbereitungseinrichtung (32) aufweist.

22. Anlage nach einem der Ansprüche 14, 16, 17, 20 und 21, dadurch gekennzeichnet, daß sie ein Waschsieb (104), eine nachgeordnete Waschwanne (105) und ein nachgeordnetes Entwässerungssieb (109) aufweist.

23. Anlage nach Anspruch 22, dadurch gekennzeichnet, daß in der Waschwanne (105) eine Entwässerungsschnecke angeordnet ist.
